# DEMANDE DE BREVET EUROPEEN

(11) **EP 2 604 407 A1**
(43) Date de publication de la demande: **19.06.2013**
(21) Numéro de dépôt: 12194914.3
(22) Date de dépôt: 29.11.2012
(51) Int. Cl.: B29C 45/14, B29L 23/00

(54) **Procédé de fabrication d'un ensemble tubulaire thermoplastique comportant un élément fonctionnel surmoulé et produit ainsi obtenu.**

(30) Priorité: 15.12.2011 FR 1161667
(71) Demandeur: Rehau SA, 57340 Morhange (FR)
(72) Inventeur: Spies, Ina, 95111 Rehau (DE); Ludwig, Hans-Joachim, 72654 NECKARTENZLINGEN (DE); Pennerath, Eddy, 57450 HENRIVILLE (FR)
(74) Mandataire: Merckling, Norbert

(57) **Abrégé**

Après avoir fabriqué une pièce tubulaire (2) à base de matière thermoplastique, on engage dans son volume intérieur (6) un noyau de surmoulage (5) amovible formé par un remplissage ou un garnissage en le faisant passer par une ouverture (7) de la pièce tubulaire.

On place ensuite cette pièce tubulaire dans un moule d'injection (12) et on surmoule autour d'elle au moins un élément fonctionnel (3) à partir d'une matière thermoplastique compatible.

Après démoulage, on retire le noyau de surmoulage.

La présence du noyau de surmoulage qui remplit entièrement le volume intérieur de la pièce tubulaire permet de rigidifier la pièce tubulaire pendant le surmoulage et ainsi d'éviter sa déformation.

Avantageusement, la pièce tubulaire peut être de forme quelconque, même complexe et irrégulière.

Cette invention intéresse les constructeurs de véhicules automobiles et d'accessoires pour véhicules automobiles.

## Description

La présente invention se rapporte à un procédé de fixation par surmoulage d'un élément fonctionnel à base de matière thermoplastique sur une pièce tubulaire à base de matière thermoplastique compatible, qui présente une forme et/ou une section quelconque. Ce procédé de fixation utilise un noyau de surmoulage comprenant un remplissage ou un garnissage adapté pour s'adapter à des pièces tubulaires pouvant présenter une géométrie irrégulière et complexe.

L'invention se rapporte également au produit obtenu par un tel procédé, à savoir un ensemble tubulaire comprenant une pièce tubulaire à base de matière thermoplastique, de forme et/ou de section quelconque, et un ou plusieurs éléments fonctionnels à base d'une matière thermoplastique compatible, surmoulé(s) sur la pièce tubulaire.

Dans de nombreux domaines techniques et notamment dans celui de l'automobile, mais également dans l'industrie nautique et aéronautique ou par exemple dans le domaine du sport, la tendance actuelle consiste à vouloir remplacer des pièces traditionnellement métalliques par des pièces équivalentes en matière plastique.

Un tel remplacement a pour but de diminuer le prix de revient de ces pièces, de simplifier leur fabrication, mais également d'éviter les problèmes de corrosion et d'obtenir un gain de poids particulièrement appréciable lorsque l'on souhaite limiter la consommation de carburant.

Le défaut de ces pièces en matière plastique par rapport à leurs homologues métalliques est leur plus faible résistance mécanique. Afin d'augmenter leur rigidité tout en limitant la quantité de matière première utilisée, on cherche souvent à utiliser des pièces creuses et le plus souvent tubulaires.

Ces pièces tubulaires peuvent également être renforcées par une armature métallique ou préférentiellement par des fibres courtes ou longues, voire des fils continus, de verre, de carbone ou même d'aramides.

Sur ces pièces tubulaires, il est souvent nécessaire de rapporter et de fixer un ou plusieurs éléments fonctionnels tels que par exemple des pattes ou des platines de fixation, des embouts, des nervures ou éléments de rigidification, des éléments de liaison, des colliers de maintien ou autres éléments servant au montage et à la fixation de pièces ou accessoires destinés à se trouver à proximité de la pièce tubulaire en configuration d'utilisation.

Ces éléments fonctionnels sont classiquement réalisés indépendamment de la pièce tubulaire, puis rapportés et assemblés sur celle-ci par différentes techniques du genre assemblage mécanique, soudage ou collage.

Cependant, ces techniques d'assemblage ne sont pas toujours faciles à mettre en oeuvre et peuvent même être impossibles à utiliser dans certains cas, du fait de la géométrie irrégulière et complexe de la pièce tubulaire.

En effet, selon les applications envisagées, les pièces tubulaires ne sont pas forcément rectilignes, ni de diamètre et/ou de forme présentant une section constante. Elles peuvent notamment être cintrées, aplaties, vrillées, étirées ou comprimées localement. Elles peuvent présenter des déformations locales ou des zones de modification de diamètre ou de section, des courbures ou même des changements d'axe.

En outre, ces techniques de fixation impliquent un procédé comprenant au moins trois étapes : une étape de fabrication de la pièce tubulaire (suivie éventuellement d'une étape de mise en forme de la pièce tubulaire), une étape indépendante de fabrication du ou des éléments fonctionnels, puis une étape de fixation des éléments fonctionnels sur la pièce tubulaire.

De plus, avec les procédés classiques de fixation par soudage ou collage, les éléments fonctionnels doivent être repris par un opérateur, positionnés très précisément sur la pièce tubulaire, puis solidarisés à celle-ci. Un mauvais positionnement, une inversion entre les éléments fonctionnels ou un oubli sont toujours possibles et peuvent être la cause de malfaçons.

On connaît également la technique du surmoulage. Un tel surmoulage, bien que particulièrement avantageux en théorie n'est pas évident à mettre en oeuvre sur le plan pratique dans le cas de pièces tubulaires constituées d'une base thermoplastique.

En effet, lorsque la pièce tubulaire est placée dans un moule de surmoulage, elle doit résister à la température et à la pression d'injection de la matière plastique fondue destinée à former les éléments fonctionnels. Cette pression d'injection est très importante et peut atteindre les 400 bars. Du fait de sa forme creuse et du ramollissement de la matière thermoplastique qui la constitue au contact de la matière injectée chaude, la pièce tubulaire s'écrase sous la pression et peut même imploser.

Pour éviter ce phénomène, il est connu d'engager temporairement un noyau de surmoulage amovible à l'intérieur de la pièce tubulaire qui a pour fonction de renforcer la pièce tubulaire de l'intérieur et ainsi de maintenir sa géométrie pendant l'opération de surmoulage.

Lorsque la pièce tubulaire est sous la forme d'un tube droit à section régulière, il est connu d'utiliser un noyau de surmoulage amovible sous la forme d'un cylindre solide, en une ou plusieurs parties.

Lorsque la pièce tubulaire est sous la forme d'un tube courbe et/ou présentant des variations de section, il n'est pas toujours possible d'utiliser un noyau de surmoulage amovible sous la forme d'un cylindre solide car celui-ci ne peut pas toujours pénétrer entièrement à l'intérieur de la pièce tubulaire afin de remplir le volume intérieur de celle-ci pour sa partie placée dans le moule de surmoulage.

Il est alors connu d'utiliser un noyau de surmoulage amovible sous la forme d'un gaz sous pression ou d'un liquide.

L'utilisation d'un tel fluide incompressible comporte cependant plusieurs désavantages :
- l'utilisation d'un fluide incompressible nécessite une étanchéité parfaite à l'intérieur de la pièce tubulaire pendant l'injection, ce qui est techniquement contraignant et difficile, notamment pour s'opposer à une pression d'injection de 400 bars ;
- le fluide incompressible utilisé a tendance à refroidir la pièce tubulaire pendant l'injection, ce qui empêche qu'elle fonde superficiellement et peut provoquer des problèmes de tenue pour la pièce surmoulée ;
- l'élévation en température de la pièce tubulaire pendant l'injection a tendance à augmenter la température à l'intérieur de celle-ci et à provoquer la dilatation du fluide incompressible utilisé, ce qui peut provoquer des déformations de la pièce tubulaire et des problèmes d'étanchéité accrus.

Le procédé de l'invention permet avantageusement de pallier les inconvénients précités. Il est ainsi possible de surmouler les éléments fonctionnels sur la pièce tubulaire sans détérioration, ni même déformation de celle-ci et ce quelle que soit sa géométrie, même irrégulière et complexe.

Un autre but de l'invention est de diminuer ce nombre d'étapes en proposant un procédé dans lequel les éléments fonctionnels sont réalisés et fixés sur la pièce tubulaire en une seule et même étape de surmoulage.

Une telle diminution du nombre d'étapes permet avantageusement de raccourcir la durée de la fabrication, d'augmenter le rendement et d'obtenir une réduction significative du prix de revient de la pièce tubulaire équipée de ces éléments fonctionnels.

Réaliser et fixer les éléments fonctionnels en une seule et même étape de surmoulage permet de réaliser en outre une importante économie d'énergie, car la chaleur utilisée pour faire fondre la matière plastique au cours du moulage des éléments fonctionnels est suffisante pour faire fondre superficiellement la pièce tubulaire et pour réaliser ainsi la solidarisation des deux matières plastiques compatibles par liaison intime de ces matières fondues. Contrairement à la pratique antérieure, il n'est donc pas nécessaire de chauffer une nouvelle fois les pièces refroidies pour réaliser le soudage, après avoir fourni l'énergie nécessaire à leur moulage lors des étapes précédentes.

Le procédé selon l'invention évite avantageusement les erreurs de positionnement et de fixation, le moule de surmoulage donnant par conception la nature, les dimensions et le positionnement précis de chacun des éléments fonctionnels à réaliser et à assembler.

La solidarisation des éléments fonctionnels sur le tube est en outre extrêmement solide, car elle est réalisée sur l'ensemble de la surface de contact entre la pièce tubulaire et les éléments fonctionnels, ce qui n'est pas toujours le cas avec les techniques classiques de collage ou de soudage.

Les buts assignés à l'invention sont atteints à l'aide d'un procédé de fabrication d'un ensemble tubulaire comprenant une pièce tubulaire de forme quelconque à base de matière thermoplastique, et, au moins un élément fonctionnel à base de matière thermoplastique compatible, fixé sur la pièce tubulaire ; **caractérisé en ce qu'il** comprend les étapes suivantes :
- on fabrique ou on apporte une pièce tubulaire à base de matière thermoplastique qui comporte au moins une ouverture donnant accès à son volume intérieur ;
- on place la pièce tubulaire dans un moule d'injection prévu pour recevoir la pièce tubulaire tout en laissant une cavité libre afin d'y mouler l'au moins un élément fonctionnel et de le lier à la pièce tubulaire par surmoulage ;
- on engage un noyau de surmoulage amovible de remplissage dans le volume intérieur de la pièce tubulaire en le faisant passer par cette au moins une ouverture, ce noyau de surmoulage occupant le volume intérieur de façon à soutenir la pièce tubulaire pendant l'injection afin d'éviter sa déformation ;
- après avoir fermé le moule d'injection, on injecte dans celui-ci une matière thermoplastique à l'état fondu, compatible avec la pièce tubulaire, qui vient remplir la cavité libre et ainsi mouler l'au moins un élément fonctionnel tout en le liant par surmoulage à la pièce tubulaire ;
- on retire le noyau de surmoulage amovible de remplissage hors du volume intérieur de la pièce tubulaire pendant le refroidissement de la matière thermoplastique d'injection en le faisant passer par l'au moins une ouverture de la pièce tubulaire ;
- après refroidissement suffisant, on sort l'ensemble tubulaire formé de la pièce tubulaire et de l'au moins un élément fonctionnel surmoulé sur celle-ci, hors du moule d'injection ;
- on retire, le cas échéant, le noyau de surmoulage de remplissage en le faisant passer par l'au moins une ouverture de la pièce tubulaire ;
et **caractérisé en ce qu'il** consiste à utiliser un noyau de surmoulage amovible de remplissage formé par un remplissage ou un garnissage en morceaux, granulaire, particulaire ou encore pulvérulent de manière à pouvoir s'écouler à l'intérieur du volume intérieur creux de la pièce tubulaire et d'en remplir les moindres recoins.

Les buts assignés à l'invention sont également atteints à l'aide d'un procédé de fabrication d'un ensemble tubulaire comprenant une pièce tubulaire de forme quelconque à base de matière thermoplastique, et, au moins un élément fonctionnel à base de matière thermoplastique compatible, fixé sur la pièce tubulaire ; **caractérisé en ce qu'il** comprend les étapes suivantes :
- on fabrique ou on apporte une pièce tubulaire à base de matière thermoplastique qui comporte au moins une ouverture donnant accès à son volume intérieur ;
- on engage un noyau de surmoulage amovible de remplissage dans le volume intérieur de la pièce tubulaire en le faisant passer par cette au moins une ouverture, ce noyau de surmoulage occupant le volume intérieur de façon à soutenir la pièce tubulaire pendant l'injection afin d'éviter sa déformation ;
- on place la pièce tubulaire dans un moule d'injection prévu pour recevoir la pièce tubulaire tout en laissant une cavité libre afin d'y mouler l'au moins un élément fonctionnel et de le lier à la pièce tubulaire par surmoulage ;
- après avoir fermé le moule d'injection, on injecte dans celui-ci une matière thermoplastique à l'état fondu, compatible avec la pièce tubulaire, qui vient remplir la cavité libre et ainsi mouler l'au moins un élément fonctionnel tout en le liant par surmoulage à la pièce tubulaire ;
- après refroidissement suffisant, on sort l'ensemble tubulaire formé de la pièce tubulaire et de l'au moins un élément fonctionnel surmoulé sur celle-ci, hors du moule d'injection ;
- on retire le noyau de surmoulage amovible de remplissage hors du volume intérieur de la pièce tubulaire pendant le refroidissement de la matière thermoplastique d'injection en le faisant passer par l'au moins une ouverture de la pièce tubulaire ou on fait sortir le noyau de surmoulage amovible de remplissage après le refroidissement ;
et **caractérisé en ce qu'il** consiste à utiliser un noyau de surmoulage amovible de remplissage formé par un remplissage ou un garnissage en morceaux, granulaire, particulaire ou encore pulvérulent de manière à pouvoir s'écouler à l'intérieur du volume intérieur creux de la pièce tubulaire et d'en remplir les moindres recoins.

Selon une caractéristique supplémentaire, ce procédé de fabrication comprend en outre les étapes supplémentaires de bouchage de l'au moins une ouverture donnant accès au volume intérieur de la pièce tubulaire ; puis après le surmoulage de débouchage de cette au moins une ouverture.

Ce procédé peut consister à réaliser le noyau de surmoulage grâce à un remplissage ou un garnissage d'un volume intérieur de la pièce tubulaire avec des objets solides de petite ou de très petite taille tels que du sable ou des sphéroïdes ou des billes d'acier ou de verre.

On peut fabrique la pièce tubulaire par extrusion, par moulage par injection, par pultrusion, par pull-winding, par enroulement filamentaire autour d'un mandrin rotatif, par pressage à chaud ou par tressage, entrelacement ou tissage.

Après avoir fabriqué ou apporté la pièce tubulaire, on peut mettre en forme cette pièce tubulaire, par exemple en la cintrant, en modifiant sa forme de section, en l'aplatissant, en la comprimant, en l'étirant ou en la déformant.

Avant d'injecter la matière thermoplastique compatible dans le moule, on peut placer dans la cavité libre du moule d'injection une armature, un insert ou un élément préformé réalisé à partir d'une résine thermoplastique renforcée de fibres ou de fils continus de verre, de carbone ou d'aramides.

Pour effectuer un surmoulage conforme à l'invention, avant de placer la pièce tubulaire dans le moule d'injection, on engage temporairement à l'intérieur de celle-ci un noyau de surmoulage amovible sous la forme d'un remplissage ou d'un garnissage en morceaux, granulaire, particulaire ou encore pulvérulent, de manière à pouvoir s'écouler à l'intérieur du volume intérieur creux de la pièce tubulaire et d'en remplir les moindres recoins. Ce noyau de surmoulage amovible sous la forme d'un remplissage ou d'un garnissage a pour fonction de renforcer la pièce tubulaire de l'intérieur et ainsi de maintenir sa géométrie pendant l'opération de surmoulage.

Ce noyau de surmoulage remplit le volume intérieur de la pièce tubulaire à la manière d'une contre-forme de façon à soutenir la paroi de la pièce tubulaire pendant l'injection et est suffisamment résistant pour résister à la pression d'injection. Une fois l'opération de surmoulage terminée, ce noyau de surmoulage amovible est retiré hors de la pièce tubulaire.

Etant sous la forme d'un remplissage ou d'un garnissage en morceaux, granulaire, particulaire ou encore pulvérulent, ce noyau de surmoulage amovible est adapté pour pouvoir être engagé dans, puis retiré facilement hors de la pièce tubulaire, tout en remplissant entièrement le volume intérieur de la partie de la pièce tubulaire placée dans le moule de surmoulage.

Le volume intérieur de la pièce tubulaire peut ainsi être rempli quelle que soit sa géométrie, même si elle est complexe et irrégulière. La pièce tubulaire remplie est plus résistante et sa géométrie est conservée pendant le surmoulage. Le noyau de surmoulage peut ensuite être retiré une fois le surmoulage terminé par simple écoulement hors de la pièce tubulaire.

Constitué d'objets ou de particules solides de petite ou de très petite taille, le noyau de surmoulage amovible de l'invention résiste de manière efficace aux pressions d'injection élevées, sans pour autant nécessiter une étanchéité parfaite à l'intérieur de la pièce tubulaire pendant l'injection. Il suffit en effet que la matière constituant le noyau de surmoulage amovible ne s'écoule pas en dehors de la pièce tubulaire.

La matière utilisée pour le noyau de surmoulage amovible de l'invention présente avantageusement un pouvoir isolant élevé pour éviter qu'elle refroidisse la pièce tubulaire pendant l'injection. La fonte superficielle de la pièce n'est alors pas altérée. On évite ainsi d'éventuels problèmes de tenue mécanique pour la pièce surmoulée.

Au contraire, pour d'autres applications, on peut également envisager d'utiliser une matière présentant un faible pouvoir isolant pour le noyau de surmoulage amovible de l'invention. Lors du surmoulage, celle-ci est donc rapidement chauffée à travers la pièce tubulaire, ce qui évite qu'elle ne refroidisse la pièce tubulaire pendant l'injection. Si le noyau de surmoulage amovible n'est pas retiré immédiatement après l'injection, le refroidissement de la pièce tubulaire est légèrement retardé par la présence et la température élevée dudit noyau de surmoulage, ce qui peut améliorer la tenue pour la pièce surmoulée.

Enfin, la matière utilisée pour le noyau de surmoulage amovible de l'invention peut être prévue pour présenter un faible coefficient de dilatation thermique. Lors du surmoulage, l'élévation en température de la pièce tubulaire ne provoque ainsi pas la dilatation du noyau de surmoulage utilisé, ce dernier ne provoquant pas à son tour de déformations de la pièce tubulaire.

Le noyau de surmoulage amovible de l'invention sous la forme d'un remplissage ou d'un garnissage peut également être associé à un ou plusieurs noyaux de surmoulage amovibles classiques par exemple sous la forme d'un cylindre solide.

On peut par exemple envisager de confiner le remplissage ou garnissage entre deux cylindres ou pièces solides. Le remplissage ou garnissage peut ainsi être comprimé entre deux cylindres solides, ce qui permet notamment de s'assurer que le remplissage ou le garnissage occupe tout le volume libre de la pièce tubulaire compris entre les deux cylindres solides et de s'assurer qu'il ne se déforme pas ou ne s'échappe pas sous la pression lors de l'injection.

Les buts assignés à l'invention sont également atteints à l'aide d'un ensemble tubulaire comprenant une pièce tubulaire de forme quelconque à base de matière thermoplastique et au moins un élément fonctionnel à base d'une matière thermoplastique compatible, fixé sur la pièce tubulaire, **caractérisé en ce qu'il** est obtenu par la mise en oeuvre du procédé de l'invention.

Selon une caractéristique supplémentaire, la pièce tubulaire peut contenir du polypropylène ou du polyamide.

La pièce tubulaire peut être renforcée par une armature, par au moins un renfort métallique, par des fibres courtes ou longues de verre, de carbone ou d'aramides, ou par des fils continus de verre, de carbone ou d'aramides.

La pièce tubulaire peut présenter un changement de diamètre, une modification de forme de section, une courbure en S, un rétrécissement local, un cintrage en C, en U ou en V, une section sensiblement ronde, rectangulaire ou ovale, ou une zone aplatie, étirée, comprimée ou déformée.

L'élément fonctionnel peut être une patte de fixation, une platine de fixation, un embout, une nervure ou un élément de rigidification, un élément de liaison, un collier de maintien ou un élément de montage et de fixation d'une pièce ou d'un accessoire destiné à se trouver à proximité de la pièce tubulaire en configuration d'utilisation.

L'élément fonctionnel peut être renforcé par une armature ou un insert métallique, par des fibres courtes ou longues de verre, de carbone ou d'aramides, ou par des fils continus de verre, de carbone ou d'aramides.

Enfin, selon une caractéristique supplémentaire de l'invention, l'ensemble tubulaire peut être une traverse pour véhicule automobile, une traverse de planche de bord, un renfort tubulaire cintré pour dossier de siège, un support de face avant pour véhicule automobile ou un support de calandre.

D'autres caractéristiques et avantages de l'invention apparaîtront dans la description qui suit, donnée à titre d'exemple et accompagnée des dessins dans lesquels :
- la figure 1 est une vue en perspective d'un exemple d'ensemble tubulaire selon l'invention ;
- la figure 2 est une vue en coupe longitudinale illustrant schématiquement le procédé de surmoulage selon l'invention, permettant d'obtenir l'ensemble tubulaire de la figure 1 ;
- la figure 3 est une vue schématique en coupe longitudinale d'une pièce tubulaire sous la forme d'un tube simple dans laquelle est engagé un noyau de surmoulage selon l'art antérieur, à savoir sous la forme de deux inserts métalliques ;

- les figures 4 à 6 sont des vues schématiques en coupe longitudinale de différents exemples de pièces tubulaires prévues pour la réalisation d'un ensemble tubulaire selon l'invention et dans lesquelles est engagé un noyau de surmoulage formé d'un remplissage ou d'un garnissage sous la forme de billes confiné entre deux inserts métalliques, avec :
   - pour la figure 4, une pièce tubaire avec un changement de diamètre ;
   - pour la figure 5, une pièce tubulaire courbée en S, et
   - pour la figure 6, une pièce tubulaire avec un rétrécissement central ;
- les figures 7 à 10 sont des vues schématiques en coupe de différents exemples de pièces tubulaires prévues pour la réalisation d'un ensemble tubulaire selon l'invention et dans lesquelles sont insérés un noyau de surmoulage sous la forme d'un remplissage ou d'un garnissage sous la forme de billes, avec :
   - pour la figure 7, une vue en coupe longitudinale d'une pièce tubulaire dont les extrémités présentent un diamètre inférieur à celui de la partie centrale,
   - pour la figure 8, une vue en coupe longitudinale d'une pièce tubulaire cintrée en C,
   - pour la figure 9, une vue en coupe transversale d'une pièce tubulaire présentant un enfoncement localisé, et
   - pour la figure 10, une vue en coupe transversale d'une pièce tubulaire à section sensiblement rectangulaire ;

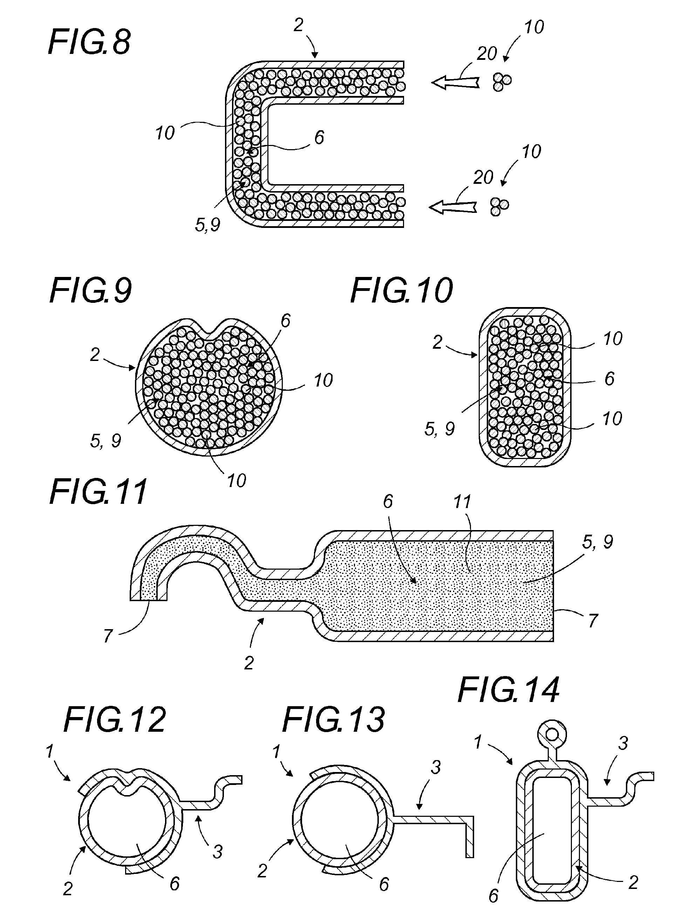

- la figure 11 est une vue schématique en coupe longitudinale d'une pièce tubulaire, à profil irrégulier complexe, prévue pour la réalisation d'un ensemble tubulaire selon l'invention et renfermant une matière granulaire, pulvérulente ou du sable servant de noyau de remplissage pour le surmoulage ; et
- les figures 12 à 14 sont des vues schématiques en coupe transversale de différents exemples d'ensembles tubulaires selon l'invention.

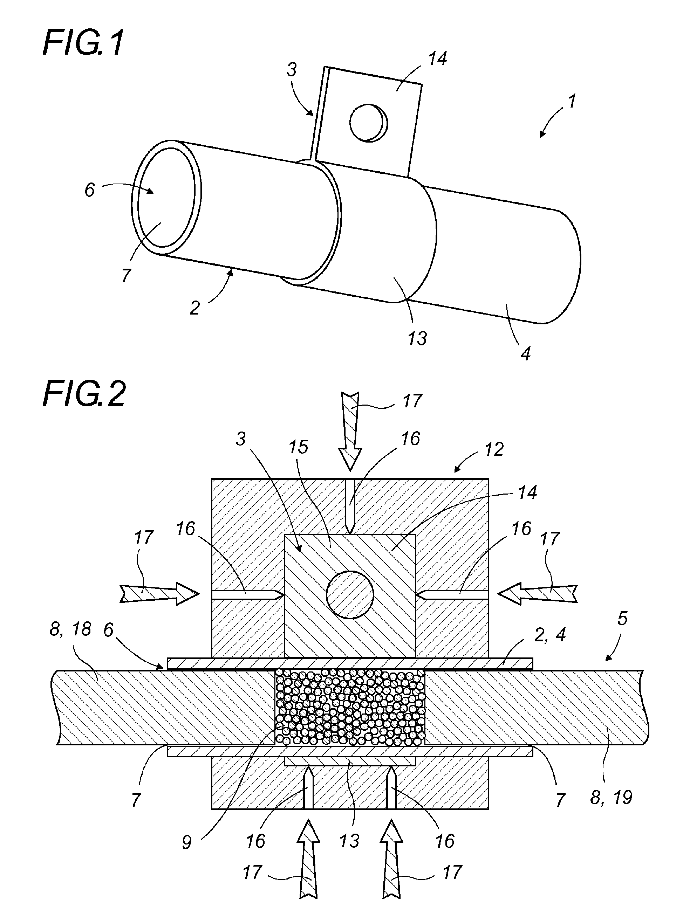

Le procédé selon la présente invention va maintenant être décrit de façon détaillée en référence aux figures 1 à 14. Les éléments équivalents représentés sur les différentes figures porteront les mêmes références numériques.

Sur la figure 1, on a représenté un exemple d'ensemble tubulaire 1 selon l'invention comprenant une pièce tubulaire 2 et un élément fonctionnel 3 surmoulé.

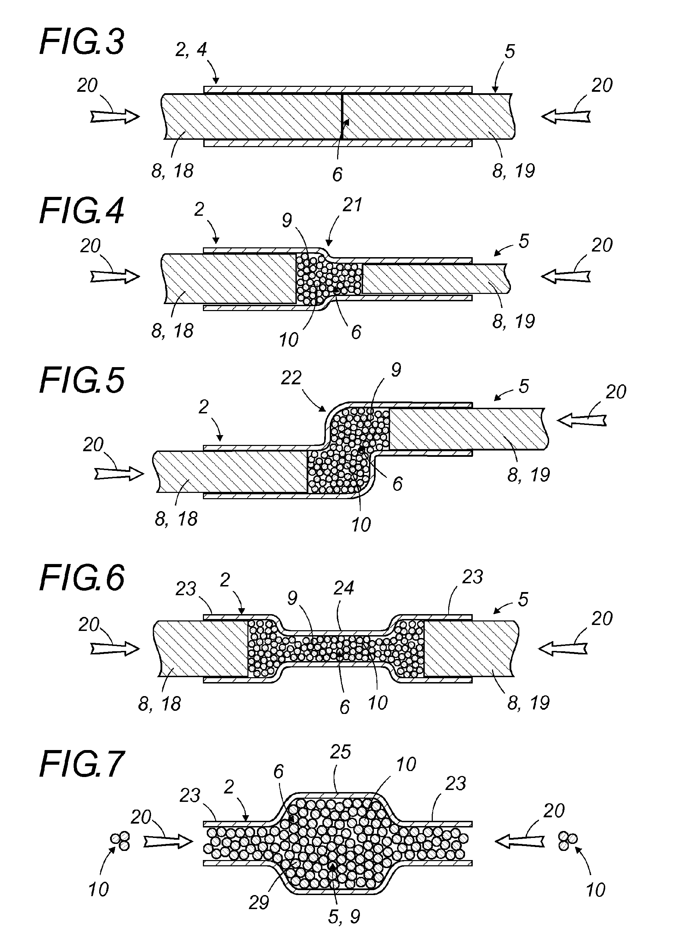

La pièce tubulaire 2 est une pièce creuse réalisée à partir d'une matière thermoplastique. Sur l'exemple de la figure 1, il s'agit d'un simple tube cylindrique 4. Cependant, sa géométrie peut être bien plus complexe comme on le verra par la suite en référence aux figures 4 à 12.

Selon les applications envisagées, la pièce tubulaire 2 peut être composée uniquement d'une résine thermoplastique, du polypropylène ou du polyamide par exemple, ou d'un mélange de plusieurs de ces résines.

Lorsqu'une rigidité plus importante est nécessaire, la pièce tubulaire 2 peut être réalisée par exemple à partir d'une matière composite constituée d'une résine thermoplastique et de fibres courtes ou longues de verre, de carbone ou d'aramides. Il peut s'agir également de fils continus de verre, de carbone ou d'aramides. De surcroît, ces fils peuvent être croisés, tressés, entrelacés ou tissés.

La pièce tubulaire 2 peut également comprendre une armature ou un ou plusieurs renforts métalliques, mais doit dans tous les cas comprendre une base de résine thermoplastique au moins au niveau de sa couche périphérique.

La pièce tubulaire 2 est réalisée au cours d'une étape préalable de fabrication de la pièce tubulaire. Cette étape de fabrication est réalisée selon une technique connue, en continu ou non, dépendant de la nature et de la composition de la pièce tubulaire 2 à obtenir. Il s'agit par exemple d'une fabrication par extrusion, par moulage par injection, par pultrusion, par pull-winding, par enroulement filamentaire autour d'un mandrin rotatif, par pressage à chaud, par tressage, entrelacement ou tissage.

Si nécessaire, la pièce tubulaire 2 peut ensuite être reprise et mise en forme pour respecter les spécifications particulières imposées par l'application envisagée. Au cours de cette étape de mise en forme, elle peut ainsi par exemple être cintrée (en C comme sur la figure 8, en U, en V ou selon tout autre conformation souhaitée), aplatie par endroits, étirée ou comprimée localement, déformée sur toute sa longueur ou localement. La forme de sa section peut également être modifiée localement ou sur toute sa longueur et rendue par exemple ovale, rectangulaire (figure 10) ou autre.

Selon l'invention, une fois la pièce tubulaire 2 réalisée ou apportée, un noyau de surmoulage 5 amovible est placé dans le volume intérieur 6 de la pièce tubulaire 2. On utilise pour cela une ou plusieurs ouvertures 7 de la pièce tubulaire 2 donnant accès à son volume intérieur 6.

Comme indiqué précédemment, ce noyau de surmoulage 5 peut avoir différentes formes et natures.

Pour une pièce tubulaire 2 sous la forme d'un tube simple, il peut s'agir par exemple d'un insert sous la forme d'un corps ou bloc solide 8 selon l'art antérieur, en une ou plusieurs parties, comme représenté sur la figure 3.

Pour une pièce tubulaire 2 de forme complexe, le noyau de surmoulage 5 selon l'invention peut être sous la forme d'un remplissage ou d'un garnissage 9 de manière à pouvoir s'écouler à l'intérieur du volume intérieur creux de la pièce tubulaire et d'en remplir les moindres recoins.

Ce remplissage ou garnissage 9 est formé d'un matériau ou d'une matière en morceaux ou de morceaux 10, d'une matière ou d'un matériau divisé ou fractionné, ou particulaire, ou pulvérulent 11 comme représenté respectivement sur les figures 7 et 11.

Le noyau de surmoulage 5 selon l'invention comprend un remplissage ou un garnissage 9 en morceaux 10, granulaire, particulaire ou encore pulvérulent 11 de manière à former un insert de surmoulage ruisselant capable de s'écouler à l'intérieur du volume intérieur 6 creux de la pièce tubulaire 2 et d'en remplir les moindres recoins. Comme on peut bien le comprendre, ce noyau de remplissage 5 selon l'invention est par exemple formé de la juxtaposition de mini-corps unitaires solides constituant une masse que l'on peut éventuellement compacter ou mettre sous pression.

Il s'agit par exemple d'objets solides de petite ou de très petite taille tels que des sphéroïdes, des billes ou autres, qui permettent de remplir au mieux la pièce tubulaire creuse afin d'éviter sa déformation pendant le surmoulage. Ces objets solides peuvent ensuite être retirés ou évacués une fois le surmoulage terminé par simple écoulement hors de la pièce tubulaire 2. Il n'y a pas besoin d'éviter le retrait lié au refroidissement de la matière injectée. Cette évacuation peut avoir lieu à tout moment et notamment en fin de refroidissement.

A titre d'exemple préférentiel, on peut citer l'utilisation de billes d'acier ou de verre. L'utilisation de sable peut également être envisagée.

On peut aussi envisager un noyau de surmoulage 5 composite constitué pour partie par un ou plusieurs corps solides 8 et pour une autre partie par un remplissage ou un garnissage 9 comme représenté sur les figures 2 et 4 à 6.

Dans le cas d'un noyau de surmoulage 5 constitué d'un remplissage ou d'un garnissage 9 en morceaux 10, particulaire ou pulvérulent 11, les ouvertures 7 de la pièce tubulaire 2 doivent être provisoirement bouchées après l'introduction du noyau de surmoulage 5.

Dans le cas où on utilise noyau de surmoulage 5 composite constitué pour partie par un ou plusieurs corps solides 8 et pour une autre partie par un remplissage ou un garnissage 9, les corps solides 8 peuvent permettre de boucher provisoirement les ouvertures 7 de la pièce tubulaire 2.

Le remplissage ou garnissage 9 est préférentiellement introduit en premier dans le volume intérieur 6 de la pièce tubulaire 2, tandis que les corps ou blocs solides 8 sont ensuite introduits dans le volume intérieur 6 de la pièce tubulaire 2, par exemple de part et d'autre du remplissage ou garnissage 9.

Les corps ou blocs solides 8 peuvent être introduits dans le volume intérieur 6 de la pièce tubulaire 2 jusqu'à des positions indexées. Ils peuvent également être déplacés en direction d'une position centrale occupée par le remplissage ou garnissage 9 afin de confiner ou de comprimer ce dernier de part et d'autre et de s'assurer qu'il occupe tout le volume libre de la pièce tubulaire 2 compris entre les corps ou blocs solides 8. Ce mouvement de confinement ou de compression de la part des corps ou blocs solides 8 peut par exemple se poursuivre jusqu'à ce que le taux de compression du remplissage ou garnissage 9 atteigne une valeur choisie, qui se traduit pas une valeur seuil de résistance au déplacement des corps ou blocs solides 8 l'un vers l'autres.

Selon une variante, on peut imaginer qu'au moins un corps ou bloc solide 8 est fixe tandis qu'au moins un autre corps ou bloc solide 8 est mobile.

C'est la valeur du taux de compression du remplissage ou garnissage 9 dans le volume intérieur 6 de la pièce tubulaire 2 qui détermine principalement si ce remplissage ou garnissage 9 ne se déforme pas ou ne s'échappe pas sous la pression lors de l'injection.

Une fois le noyau de surmoulage 5 amovible placé dans le volume intérieur 6 de la pièce tubulaire 2, cette dernière est ensuite placée dans un moule d'injection 12 afin de procéder au surmoulage des éléments fonctionnels 3.

Sur la figure 2, on a représenté schématiquement l'étape de surmoulage selon l'invention pour l'ensemble tubulaire 1 de la figure 1.

Sur cette figure, le noyau de surmoulage 5 est sous la forme de deux corps ou blocs solides 8 comprimant un remplissage ou garnissage 9. La pièce tubulaire 2 est sous la forme d'un simple tube cylindrique 4. Le noyau de surmoulage 5 a été préalablement introduit dans le volume intérieur 6 de la pièce tubulaire 2 de manière à ce que le remplissage ou garnissage 9 s'ajuste au plus près à l'intérieur de la pièce tubulaire 2 afin de servir de contre-forme pour maintenir sa géométrie pendant le surmoulage et éviter ainsi sa déformation lors de l'injection de la matière thermoplastique fondue.

La pièce tubulaire 2 et son noyau de surmoulage 5 amovible sont introduits dans le moule d'injection 12 prévu pour recevoir la pièce tubulaire 2 tout en laissant une cavité libre afin d'y mouler l'élément fonctionnel 3 et de le lier à la pièce tubulaire 2 par surmoulage. Sur cet exemple, l'élément fonctionnel 3 est une simple bague 13 prolongée par une partie supérieure à oeillet 14.

Selon une variante de l'invention, un corps ou bloc solide 8 peut être remplacé par un ou plusieurs tiroirs, manuels ou automatiques, qui viennent s'encastrer à l'intérieur de la pièce tubulaire 2 une fois celle-ci placée dans le moule d'injection 12 avant le début de l'injection de surmoulage.

Une matière thermoplastique 15, compatible avec celle de la pièce tubulaire 2 est alors injectée à l'état fondu dans le moule d'injection 12.

Sur la figure 2, on a représenté les lignes d'injection 16 par lesquelles cette matière thermoplastique 15 compatible est introduite sous pression. Les flèches 17 représentent les points d'injection de ladite matière thermoplastique 15.

Cette matière thermoplastique 15 fondue vient remplir la cavité libre autour de la pièce tubulaire 2 pour y mouler l'élément fonctionnel 3.

Dans cette zone, la matière thermoplastique 15 chaude provoque la fusion de la couche périphérique de matière thermoplastique de la pièce tubulaire 2. Les deux matières thermoplastiques compatibles se mêlent et se lient provoquant ainsi la solidarisation par surmoulage de l'élément fonctionnel 3 à la pièce tubulaire 2.

Pour obtenir un élément fonctionnel 3 plus solide, on peut aussi prévoir de placer une armature ou un insert, par exemple métallique, préformé, dans la cavité libre du moule d'injection servant à mouler cet élément fonctionnel avant de procéder à l'injection. Cet insert ou armature se trouve ensuite entièrement ou partiellement enrobé par la matière thermoplastique 15 lors de l'injection et ainsi intégré à l'élément fonctionnel 3 et fixé à la pièce tubulaire 2 par surmoulage.

On peut également envisager de placer dans cette cavité libre, un élément préformé réalisé à partir d'une résine thermoplastique renforcée de fibres courtes ou longues ou préférentiellement de fils continus de verre, de carbone ou d'aramides, pour qu'il y soit lié avec la pièce tubulaire 2 dans la masse de matière thermoplastique 15 injectée.

Le noyau de surmoulage 5 amovible est retiré hors du volume intérieur 6 de la pièce tubulaire 2 préférentiellement pendant le refroidissement de la matière de surmoulage 15, par exemple dès que le refroidissement a commencé.

Une fois le surmoulage terminé et les éléments fonctionnels 3 suffisamment refroidis, l'ensemble tubulaire 1, formé de la pièce tubulaire 2 et des éléments fonctionnels 3 surmoulés sur celle-ci, est sorti du moule d'injection 12.

Si besoin, les ouvertures 7 de la pièce tubulaire 2 sont débouchées avant de procéder à ce retrait.

Sur l'exemple des figures 1 et 2, la pièce tubulaire 2 est un simple tube cylindrique creux à section ronde régulière, ce qui permet d'y introduire très facilement un noyau de surmoulage 5 sous la forme d'un simple corps ou bloc solide 8 selon l'art antérieur.

Sur la figure 3 est représentée une pièce tubulaire 2 à section ronde et régulière dans laquelle est introduit un bloc solide 8 selon l'art antérieur, en deux parties 18 cylindriques similaire à celui représenté sur la figure 2.

Dans ce cas le plus simple et bien que non représenté, il pourrait s'agir d'un seul bloc solide 8 selon l'art antérieur, par exemple réalisé en une seule pièce.

Selon la forme de la pièce tubulaire 2, il n'est pas toujours possible d'y introduire un insert selon l'art antérieur sous la forme d'un corps ou bloc solide 8 en une ou plusieurs pièces en vue du surmoulage. C'est dans ces cas de figure qu'il devient nécessaire d'utiliser un insert sous la forme d'un noyau de surmoulage amovible 5 selon l'invention.

De même, selon la conformation de la pièce tubulaire 2, il n'est pas toujours possible d'introduire dans la pièce tubulaire un insert selon l'art antérieur sous la forme d'un corps ou bloc solide 8 remplissant entièrement son volume intérieur 6 en vue de l'étape de surmoulage.

Ceci est par exemple le cas lorsque la pièce tubulaire 2 présente une partie centrale 24 de diamètre inférieur à celui de ses portions d'extrémité 23 (figure 6), lorsque la pièce tubulaire 2 présente une partie centrale 25 de diamètre supérieur à celui de ses portions d'extrémité 23 (figure 7), ou lorsqu'elle est cintrée de manière à présenter une forme générale en U ou en C (figure 8).

A titre d'exemple, on représenté sur les figures 4 à 11 différentes pièces tubulaires 2 de forme variée, ainsi que des noyaux de surmoulage amovible 5 selon l'invention adaptés à ces pièces tubulaires 2.

Sur ces figures, les flèches 20 représentent le sens d'introduction des différentes parties du noyau de surmoulage amovible 5 selon l'invention dans le volume intérieur 6 creux des pièces tubulaires 2.

Dans le cas où le noyau de surmoulage 5 est sous la forme de deux corps ou blocs solides 8 comprimant un remplissage ou garnissage 9, les flèches 20 peuvent également représenter le sens des forces de compression exercées par les corps ou blocs solides 8 sur le remplissage ou garnissage 9.

Sur la figure 4 est représentée une pièce tubulaire 2 dont la section ronde présente un changement de diamètre 21. Afin de s'adapter à cette forme particulière de la pièce tubulaire 2, le noyau de surmoulage 5 qui y est introduit comprend deux corps ou blocs solides 8 cylindriques de diamètre différent, correspondant chacune à l'une des parties de la pièce tubulaire 2, et un remplissage ou garnissage 9 confiné ou comprimé entre ces deux corps ou blocs solides 8.

Sur la figure 5 est représentée une pièce tubulaire 2 à section ronde et régulière, mais comportant deux coudes successifs formant un décrochement 22 en forme de S. Afin de s'adapter à cette forme de la pièce tubulaire creuse, le noyau de surmoulage 5 qui y est introduit est constitué de deux corps ou blocs solides 8 cylindriques présentant chacun une forme complémentaire à la forme intérieure de la partie de la pièce tubulaire 2 dans lequel ils sont introduits, et un remplissage ou garnissage 9 confiné ou comprimé entre ces deux corps ou blocs solides 8.

Sur la figure 6 est représentée une pièce tubulaire 2 de section ronde qui comporte deux portions d'extrémité 23 d'un certain diamètre et une portion centrale 24 de diamètre inférieur. Pour s'y adapter, le noyau de surmoulage 5 correspondant comprend deux corps ou blocs solides 8 cylindriques de diamètre légèrement inférieur au diamètre intérieur des portions d'extrémité 23 de la pièce tubulaire 2 dans lequel ils sont introduits, et un remplissage ou garnissage 9 confiné ou comprimé entre ces deux corps ou blocs solides 8.

Sur la figure 7 est représentée une pièce tubulaire 2 présentant une partie centrale 25 de diamètre supérieur à celui de ses portions d'extrémité 23. Afin de s'adapter à cette forme de la pièce tubulaire creuse, le noyau de surmoulage 5 qui y est introduit est constitué d'un remplissage ou d'un garnissage 9. Bine que cela ne soit pas représentée, ce remplissage ou garnissage 9 peut être confiné ou comprimé entre deux corps ou blocs solides 8, mais au-delà de la partie centrale 24 de la pièce tubulaire 2 de diamètre supérieur à celui de ses d'extrémité 23.

Sur la figure 8 est représentée une pièce tubulaire 2 cintrée de manière à présenter une forme générale en U ou en C (figure 8). Pour s'y adapter, le noyau de surmoulage 5 qui y est introduit est constitué d'un remplissage ou d'un garnissage 9. Comme précédemment ce remplissage ou garnissage 9 peut être confiné/comprimé ou non entre deux corps ou blocs solides 8.

Comme on peut le voir sur les figure 9 et 10 un remplissage sous la forme de billes ou de petits objets permet avantageusement au noyau de surmoulage 5 amovible de remplir parfaitement le volume intérieur 6 d'une une pièce tubulaire 2 présentant n'importe quelle forme ou variation de section pour sa partie placée dans le moule de surmoulage 12.

L'utilisation d'un garnissage constitué de sable est particulièrement adaptée lorsque la section de la pièce tubulaire creuse 2 la forme du volume intérieur 6 de la pièce tubulaire même si celui-ci est parfaitement irrégulier et particulièrement complexe et présente des zones de faible diamètre, comme sur l'exemple représenté en coupe sur la figure 11.

Sur ces figures, une fois introduites et associées dans la pièce tubulaire 2, les différentes parties constitutives du noyau de surmoulage 5 s'adaptent parfaitement à la forme du volume intérieur 6 creux de la pièce tubulaire 2.

Bien entendu, un corps ou bloc solide 8 constituant une partie du noyau de surmoulage 5 selon l'invention n'est pas forcément en une ou deux parties, mais peut en comporter un nombre supérieur.

De même, par exemple dans le cas d'une pièce tubulaire 2 multi-chambres, le noyau de surmoulage 5 peut comprendre plusieurs remplissages ou garnissages 9, chacun étant prévu pour s'adapter au mieux à la forme du volume intérieur 6 creux de la pièce tubulaire 2.

Dans le cas d'un fonctionnement automatique, les opérations d'engagement et de retrait du noyau de surmoulage sont réalisées à l'intérieur du moule.

Grâce au procédé selon l'invention, il est par conséquent possible de surmouler un élément fonctionnel 3 de n'importe quelle forme sur n'importe quel type de pièce tubulaire 2. A titre d'exemple, on a représenté en coupe sur les figures 12 à 14, différents ensembles tubulaires 1 pouvant être obtenus par le procédé selon l'invention.

De tels ensembles tubulaires à base thermoplastique peuvent trouver des applications dans de nombreux domaines techniques et notamment mais non exclusivement dans le domaine automobile. On peut les utiliser avantageusement pour réaliser par exemple des traverses pour véhicule automobile qui relient les deux flancs du véhicule afin de le renforcer pour servir de protection et de sécurité en cas d'accident ; des traverses de planche de bord qui comportent des éléments support surmoulés pour le tableau de bord, la colonne de direction et les airbags du véhicule ; des renforts tubulaires cintrés pour les dossiers de siège ; des supports de face avant reliant les deux ailes du véhicule et sur lesquelles on fixe le radiateur, le ventilateur et la serrure du capot ; ou bien encore des ensembles tubulaires servant de supports de calandre.

De manière évidente, l'invention ne se limite pas aux modes de réalisation préférentiels décrits précédemment et représentés sur les différentes figures. Les caractéristiques techniques ou des étapes décrites peuvent ainsi être remplacées respectivement par des caractéristiques techniques équivalentes ou des étapes équivalentes, sans sortir du cadre de l'invention.

## Revendications

1. Procédé de fabrication d'un ensemble tubulaire (1) comprenant une pièce tubulaire (2) de forme quelconque à base de matière thermoplastique, et, au moins un élément fonctionnel (3) à base de matière thermoplastique compatible, fixé sur la pièce tubulaire (2) ; **caractérisé en ce qu'il** comprend les étapes suivantes :
- on fabrique ou on apporte une pièce tubulaire (2) à base de matière thermoplastique qui comporte au moins une ouverture (7) donnant accès à son volume intérieur (6) ;
- on place la pièce tubulaire (2) dans un moule d'injection (12) prévu pour recevoir la pièce tubulaire (2) tout en laissant une cavité libre afin d'y mouler l'au moins un élément fonctionnel (3) et de le lier à la pièce tubulaire (2) par surmoulage ;
- on engage un noyau de surmoulage (5) amovible de remplissage dans le volume intérieur (6) de la pièce tubulaire (2) en le faisant passer par cette au moins une ouverture (7), ce noyau de surmoulage (5) occupant le volume intérieur (6) de façon à soutenir la pièce tubulaire (2) pendant l'injection afin d'éviter sa déformation ;
- après avoir fermé le moule d'injection (12), on injecte dans celui-ci une matière thermoplastique à l'état fondu, compatible avec la pièce tubulaire (2), qui vient remplir la cavité libre et ainsi mouler l'au moins un élément fonctionnel (3) tout en le liant par surmoulage à la pièce tubulaire (2) ;
- on retire le noyau de surmoulage (5) amovible de remplissage hors du volume intérieur (6) de la pièce tubulaire (2) pendant le refroidissement de la matière thermoplastique d'injection en le faisant passer par l'au moins une ouverture (7) de la pièce tubulaire (2) ;
- après refroidissement suffisant, on sort l'ensemble tubulaire (1) formé de la pièce tubulaire (2) et de l'au moins un élément fonctionnel (3) surmoulé sur celle-ci, hors du moule d'injection (12) ;
- on retire, le cas échéant, le noyau de surmoulage (5) de remplissage en le faisant passer par l'au moins une ouverture (7) de la pièce tubulaire (2) ;
et **caractérisé en ce qu'il** consiste à utiliser un noyau de surmoulage (5) amovible de remplissage formé par un remplissage ou un garnissage en morceaux (9), granulaire, particulaire ou encore pulvérulent de manière à pouvoir s'écouler à l'intérieur du volume intérieur (6) creux de la pièce tubulaire et d'en remplir les moindres recoins.

2. Procédé de fabrication d'un ensemble tubulaire (1) comprenant une pièce tubulaire (2) de forme quelconque à base de matière thermoplastique, et, au moins un élément fonctionnel (3) à base de matière thermoplastique compatible, fixé sur la pièce tubulaire (2) ; **caractérisé en ce qu'il** comprend les étapes suivantes :
- on fabrique ou on apporte une pièce tubulaire (2) à base de matière thermoplastique qui comporte au moins une ouverture (7) donnant accès à son volume intérieur (6) ;
- on engage un noyau de surmoulage (5) amovible de remplissage dans le volume intérieur (6) de la pièce tubulaire (2) en le faisant passer par cette au moins une ouverture (7), ce noyau de surmoulage (5) occupant le volume intérieur (6) de façon à soutenir la pièce tubulaire (2) pendant l'injection afin d'éviter sa déformation ;
- on place la pièce tubulaire (2) dans un moule d'injection (12) prévu pour recevoir la pièce tubulaire (2) tout en laissant une cavité libre afin d'y mouler l'au moins un élément fonctionnel (3) et de le lier à la pièce tubulaire (2) par surmoulage ;
- après avoir fermé le moule d'injection (12), on injecte dans celui-ci une matière thermoplastique à l'état fondu, compatible avec la pièce tubulaire (2), qui vient remplir la cavité libre et ainsi mouler l'au moins un élément fonctionnel (3) tout en le liant par surmoulage à la pièce tubulaire (2) ;
- après refroidissement suffisant, on sort l'ensemble tubulaire (1) formé de la pièce tubulaire (2) et de l'au moins un élément fonctionnel (3) surmoulé sur celle-ci, hors du moule d'injection (12) ;
- on retire le noyau de surmoulage (5) amovible de remplissage hors du volume intérieur (6) de la pièce tubulaire (2) pendant le refroidissement de la matière thermoplastique d'injection en le faisant passer par l'au moins une ouverture (7) de la pièce tubulaire (2) ou on fait sortir le noyau de surmoulage (5) amovible de remplissage après le refroidissement ;
et **caractérisé en ce qu'il** consiste à utiliser un noyau de surmoulage (5) amovible de remplissage formé par un remplissage ou un garnissage en morceaux (9), granulaire, particulaire ou encore pulvérulent de manière à pouvoir s'écouler à l'intérieur du volume intérieur (6) creux de la pièce tubulaire et d'en remplir les moindres recoins.

3. Procédé de fabrication d'un ensemble tubulaire (1) selon la revendication 1 ou 2, **caractérisé en ce qu'il** comprend en outre les étapes supplémentaires de bouchage de l'au moins une ouverture (7) donnant accès au volume intérieur (6) de la pièce tubulaire (2) ; puis après le surmoulage de débouchage de cette au moins une ouverture (7).

4. Procédé de fabrication d'un ensemble tubulaire (1) selon l'une quelconque des revendications précédentes, **caractérisé en ce qu'il** consiste à réaliser le noyau de surmoulage grâce à un remplissage ou un garnissage d'un volume intérieur de la pièce tubulaire (2) avec des objets solides de petite ou de très petite taille tels que du sable ou des sphéroïdes ou des billes d'acier ou de verre.

5. Procédé de fabrication d'un ensemble tubulaire (1) selon l'une quelconque des revendications précédentes, **caractérisé en ce que** l'on fabrique la pièce tubulaire (2) par extrusion, par moulage par injection, par pultrusion, par pull-winding, par enroulement filamentaire autour d'un mandrin rotatif, par pressage à chaud ou par tressage, entrelacement ou tissage.

6. Procédé de fabrication d'un ensemble tubulaire (1) selon l'une quelconque des revendications précédentes, **caractérisé en ce qu'**après avoir fabriqué ou apporté la pièce tubulaire (2), on met en forme cette pièce tubulaire (2).

7. Procédé de fabrication d'un ensemble tubulaire (1) selon la revendication 6, **caractérisé en ce que** l'on met en forme la pièce tubulaire (2) en la cintrant, en modifiant sa forme de section, en l'aplatissant, en la comprimant, en l'étirant ou en la déformant.

8. Procédé de fabrication d'un ensemble tubulaire (1) selon l'une quelconque des revendications précédentes, **caractérisé en ce que,** avant d'injecter la matière thermoplastique compatible dans le moule (12), on place dans la cavité libre du moule d'injection (12) une armature, un insert ou un élément préformé réalisé à partir d'une résine thermoplastique renforcée de fibres ou de fils continus de verre, de carbone ou d'aramides.

9. Ensemble tubulaire (1) comprenant une pièce tubulaire (2) de forme quelconque à base de matière thermoplastique et au moins un élément fonctionnel (3) à base d'une matière thermoplastique compatible, fixé sur la pièce tubulaire (2), **caractérisé en ce qu'il** est obtenu par la mise en oeuvre du procédé selon l'une quelconque des revendications 1 à 8.

10. Ensemble tubulaire (1) selon la revendication 9, **caractérisé en ce que** la pièce tubulaire (2) contient du polypropylène ou du polyamide.

11. Ensemble tubulaire (1) selon la revendication 9 ou 10, **caractérisé en ce que** la pièce tubulaire (2) est renforcée par une armature, par au moins un renfort métallique, par des fibres courtes ou longues de verre, de carbone ou d'aramides, ou par des fils continus de verre, de carbone ou d'aramides.

12. Ensemble tubulaire (1) selon l'une quelconque des revendications 9 à 11, **caractérisé en ce que** la pièce tubulaire (2) présente un changement de diamètre, une modification de forme de section, une courbure en S, un rétrécissement local, un cintrage en C, en U ou en V, une section sensiblement ronde, rectangulaire ou ovale, ou une zone aplatie, étirée, comprimée ou déformée.

13. Ensemble tubulaire (1) selon l'une quelconque des revendications 9 à 12, **caractérisé en ce que** l'au moins un élément fonctionnel (3) est une patte de fixation, une platine de fixation, un embout, une nervure ou un élément de rigidification, un élément de liaison, un collier de maintien ou un élément de montage et de fixation d'une pièce ou d'un accessoire destiné à se trouver à proximité de la pièce tubulaire (2) en configuration d'utilisation.

14. Ensemble tubulaire (1) selon l'une quelconque des revendications 9 à 13, **caractérisé en ce que** l'au moins un élément fonctionnel (3) est renforcé par une armature ou un insert métallique, par des fibres courtes ou longues de verre, de carbone ou d'aramides, ou par des fils continus de verre, de carbone ou d'aramides.

15. Ensemble tubulaire (1) selon l'une quelconque des revendications 9 à 14, **caractérisé en ce qu'il** s'agit d'une traverse pour véhicule automobile, d'une traverse de planche de bord, d'un renfort tubulaire cintré pour dossier de siège, d'un support de face avant pour véhicule automobile ou d'un support de calandre.
